# EUROPÄISCHE PATENTANMELDUNG

(11) **EP 1 116 615 A2**
(43) Veröffentlichungstag der Anmeldung: **18.07.2001**
(21) Anmeldenummer: 00122046.6
(22) Anmeldetag: 11.10.2000
(51) Int. Cl.: B60H 1/04, B60H 1/08, F01P 7/16, F01P 5/10

(54) **Kühlsystem für ein Kraftfahrzeug**

(30) Priorität: 14.01.2000 DE 10001278
(71) Anmelder: Pierburg Aktiengesellschaft, 41460 Neuss (DE)
(72) Erfinder: Teubel, Jens, 04720 Döbeln (DE); Beyer, Stefan, 04654 Frohburg (DE)
(74) Vertreter: Ter Smitten, Hans

(57) **Zusammenfassung**

Kühlsystem für ein Kraftfahrzeug mit einem ersten Kühlmittelkreislauf, der Kühlkanäle eines Verbrennungsmotors einschließt und einem zweiten Kühlmittelkreislauf zur Fahrzeuginnenraumbeheizung, wobei jeder Kreislauf zumindest eine Leitung, zumindest eine Pumpe und zumindest einen Wärmetauscher aufweist und wobei der zweite Kühlmittelkreislauf über eine Zulaufstelle und eine Ablaufstelle mit dem ersten Kühlmittelkreislauf verbunden ist, wobei die Pumpe des zweiten Kühlkreislaufes steuerbar ist, wobei die Zulaufstelle (11) und die Ablaufstelle (16) des zweiten Kühlmittelkreislaufes (3) derart abflußseitig der Kühlkanäle des Verbrennungsmotors (7) mit einer Leitung des ersten Kühlmittelkreislaufes (2) verbunden sind, daß unabhängig vom Durchfluß im ersten Kühlmittelkreislauf (2) der Flüssigkeitsdruck der Zulaufstelle (11) gleich dem Flüssigkeitsdruck der Ablaufstelle (16) ist.

## Beschreibung

Die Erfindung betrifft ein Kühlsystem für ein Kraftfahrzeug mit einem ersten Kühlmittelkreislauf, der Kühlkanäle eines Verbrennungsmotors einschließt, und einem zweiten Kühlmittelkreislauf zur Fahrzeuginnenraumbeheizung, wobei jeder Kreislauf zumindest eine Leitung, eine Pumpe und zumindest einen Wärmetauscher aufweist und wobei der zweite Kühlmittelkreislauf über eine Zulaufstelle und eine Ablaufstelle mit dem ersten Kühlmittelkreislauf verbunden ist, wobei die Pumpe des zweiten Kühlkreislaufes steuerbar ist.

Ein derartiges Kühlsystem ist beispielsweise aus der Figur 2 der DE-A1-3738412 bekannt. In dem gezeigten Ausführungsbeispiel weist der Verbrennungsmotor einen ersten und einen zweiten Kühlmittelanschluß für einen Hauptkühlmittelkreislauf auf, sowie einen dritten und vierten Kühlmittelanschluß für einen Neben-Kühlmittelkreislauf, so daß der Motor partiell unterschiedlich gekühlt werden kann. Über eine Luftklappe 41 kann durch den Wärmetauscher im zweiten Kühlmittelkreislauf erwärmte Luft ins Fahrzeuginnere geleitet werden und dort eine Temperaturregelung vornehmen. Nicht benötigte erhitzte Luft wird nach außen abgeleitet. Es ist auch üblich eine derartige Anordnung wasserseitig zu steuern, wobei die Heizleistung über die durchgesetzte Kühlmittelmenge mittels eines Ventils gesteuert wird. Dabei stellt jedoch die exakte Steuerung geringer Leistungen hohe Anforderungen an die verwendeten Ventile. Nachteilig wirkt sich außerdem die Abhängigkeit der Heizleistung über Kühlmitteldruck und - temperatur von der momentanen Drehzahl und Belastung des Verbrennungsmotor aus.

In jedem Fall stellt der Einsatz von Ventilen zur Steuerung der Heizleistung für den Fahrzeuginnenraum eine aufwendige Maßnahme dar.

Der vorliegenden Erfindung liegt daher die Aufgabe zu Grunde, eine Abhilfe für die vorstehend geschilderten Probleme zu schaffen.

Diese Aufgabe wird dadurch gelöst, daß die Zulaufstelle und die Ablaufstelle des zweiten Kühlmittelkreislaufes derart abflußseitig der Kühlkanäle des Verbrennungsmotors mit der Leitung des ersten Kühlmittelkreislaufes verbunden sind, daß unabhängig vom Durchfluß im ersten Kühlmittelkreislauf der Flüssigkeitsdruck der Zulaufstelle gleich dem Flüssigkeitsdruck der Ablaufstelle ist.

Auf diese Weise ist es möglich, lediglich durch die Ansteuerung der Pumpe den Flüssigkeitsstrom durch den Wärmetauscher im zweiten Kühlmittelkreislauf ohne Einsatz von zusätzlichen Ventilen zwischen 0 und 100% zu steuern. Durch einfaches Abschalten der Pumpe kann es also z.B. im Sommer nicht zu einem ungewollten Wärmeeintrag ins Fahrzeuginnere kommen. Auch ist es auf diese Art und Weise möglich, den gewünschten Wärmebedarf auf einfache Weise, z.B. durch Potentiometer oder optional in Verbindung mit Temperatursensoren und einem Regelkreis über die Pumpendrehzahl des zweiten Kühlmittelkreislaufes zu regeln, ohne daß dabei der störende Einfluß der drehzahlabhängigen Förderleistung der Pumpe des ersten Kühlmittelkreislaufes wirksam wird.

Auf besonders einfache Weise ist der zweite Kühlmittelkreislauf über ein Kreuz-Kopplungsstück mit der Leitung des ersten Kühlmittelkreislaufes verbunden.

Ein nachträglicher, einfacher Einbau wird dadurch ermöglicht, daß die Pumpe und der Wärmetauscher des zweiten Kühlmittelkreislaufes in einem separaten Gehäuse angeordnet sind, das zudem natürlich auch noch Meß- und Steuerelemente aufweisen kann. Um den Luftdurchsatz zu beeinflussen, kann das Gehäuse zusätzlich noch ein Gebläse aufweisen.

Dadurch, daß der zweite Kühlmittelkreislauf zweifach ausgeführt wird und jeweils eine Pumpe und einen Wärmetauscher aufweist, ist es möglich auf einfache Weise eine getrennte Wärmeregelung für beispielsweise Fahrer- und Beifahrerseite zu gewährleisten.

Vorteilhafte Ausführungsbeispiele der Erfindung sind in der Zeichnung dargestellt und werden nachfolgend beschrieben.

In der Zeichnung zeigt:
- Fig. 1: ein Systemschaubild einer ersten Ausführungsform eines Kühlsystems für ein Kraftfahrzeug,
- Fig. 2: eine Einzelansicht des Kreuz-Kopplungsstückes, und
- Fig.3: eine schematische Darstellung des separaten Gehäuses.

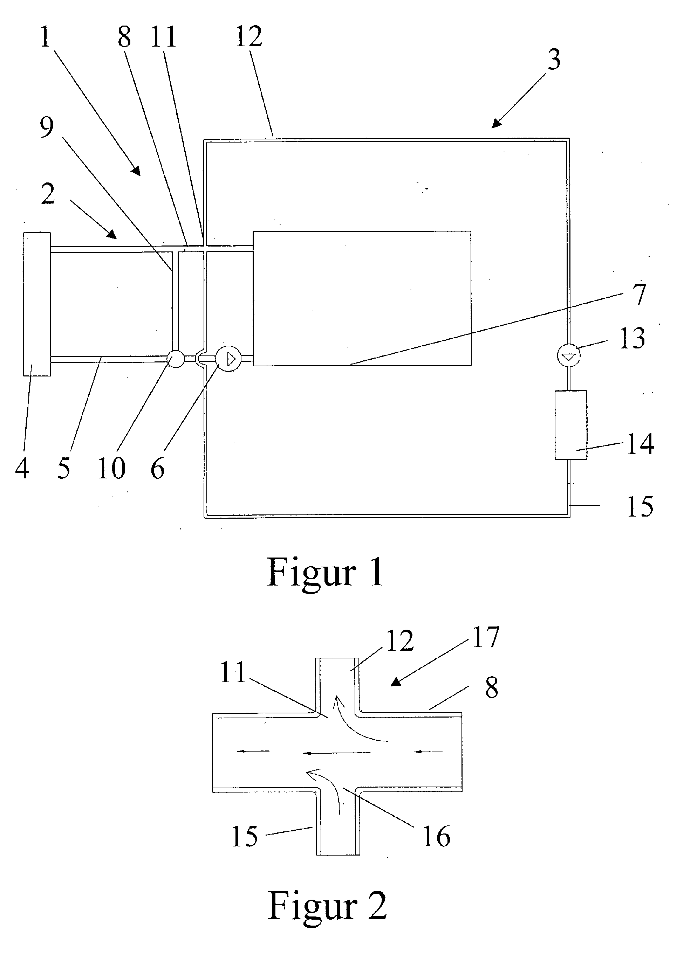

Fig. 1 stellt ein Systemschaubild des erfindungsgemäßen Kühlsystemes 1 für ein Kraftfahrzeug dar. Das Kühlsystem 1 weist dabei zwei Kühlkreisläufe 2, 3 auf. Der Kühlmittelkreislauf 2 beinhaltet einen ersten Wärmetauscher 4, der Hauptkühler, von dem über eine Leitung 5 Kühlmittel mittels einer Pumpe zu den nicht dargestellten Kühlkanälen des Verbrennungsmotors 7 geführt wird. Das erwärmte Kühlmittel wird vom Verbrennungsmotor 7 aus über eine Leitung 8 zum Hauptkühler 4 zurückgeführt. Von der Leitung 8 zweigt noch eine Kurzschlußleitung 9 zur Leitung 5 ab mit deren Hilfe mittels eines Thermostates 10, insbesondere nach einem Kaltstart, die Betriebstemperatur des Motors durch eine Überbrückung des Hauptkühlers 4 schneller erreicht werden kann. Abflußseitig der Kühlkanäle des Verbrennungsmotors 7 ist eine Zulaufstelle 11 zur Leitung 12 des zweiten Kühlmittelkreislaufes 3 angeordnet. Dieser zweite Kühlmittelkreislauf 3 weist des weiteren eine steuerbare Pumpe 13 und einen dahinter angeordneten Wärmetauscher 14, der der Beheizung des Fahrgastraumes des Fahrzeuges dient, auf. Eine Leitung 15 schließt den zweiten Kühlmittelkreislauf 3 über eine Ablaufstelle 16 wieder an die Leitung 8 an. Die Zulaufstelle 11 und die Ablaufstelle 16 sind dabei derartig an der Leitung 8 angeschlossen, daß unabhängig vom Flüssigkeitsdurchfluß im ersten Kühlmittelkreislauf 2 der Flüssigkeitsdruck der Zulaufstelle 11 gleich dem Flüssigkeitsdruck der Ablaufstelle 16 ist.
Auf diese Weise findet, beispielsweise im Sommerbetrieb, wenn keine Beheizung des Fahrgastraumes gewünscht ist, kein Kühlmitteltransport und damit auch kein Motorabwärmetransport durch den zweiten Kühlmittelkreislauf 3 statt, solange die Pumpe 13 nicht eingeschaltet ist. Wird die Pumpe 13 eingeschaltet, ist durch eine einfache Veränderung der Pumpendrehzahl eine Regulierung des Wärmetransportes und damit eine stufenlose Regelung der Fahrgastinnenraumtemperatur möglich. Auf diese Weise wird der Wärmestrom zur Beheizung des Fahrgastinnenraumes des zweiten Kühlmittelkreislaufes 3 auch nicht durch motordrehzahlbestimmte Schwankungen im ersten Kühlmittelkreislauf 2 beeinflußt.

Fig. 2 zeigt ein mögliches Kreuz-Kopplungsstück 17 zur Ankopplung des zweiten Kühlmittelkreislaufs 3 an den ersten Kühlmittelkreislauf 2. Des weiteren sind in dieser Figur die Strömungsverhältnisse bei eingeschalteter Pumpe 6 sowie eingeschalteter Pumpe 13, also Wärmetranport zum Fahrgastinnenraum hin, dargestellt.

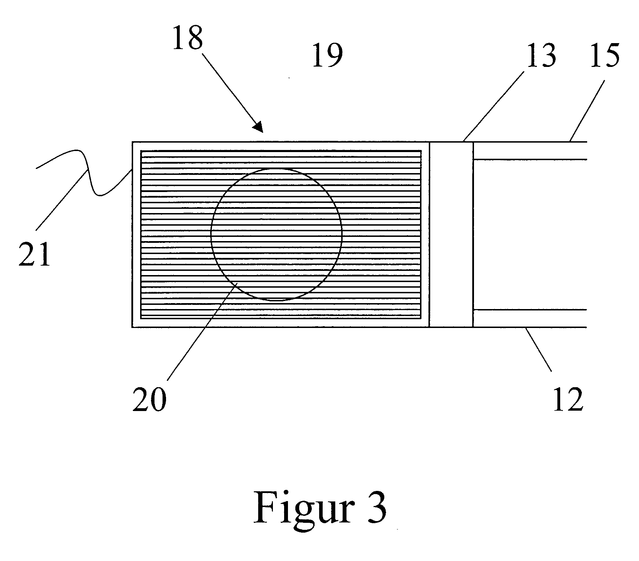

Fig. 3 zeigt ein Gehäuse 18, das frei im Fahrgastraum 19 angeordnet ist. Das Gehäuse 18 weist neben der elektrisch steuerbaren Pumpe 13 ein steuerbares Gebläse 20 auf, mit dem der Luftdurchsatz beeinflußbar ist. Über die Leitung 12 ist Kühlwasser der Pumpe 13 zuführbar, und über die Leitung 15 abführbar. Über den elektrischen Anschluß 21 werden die Pumpe 13, das Gebläse 20 sowie eventuell vorhandene Meß- und Steuerelemente mit Strom versorgt. Das Gehäuse 18 kann desweiteren mit einer herkömmlichen Standheizung kombiniert werden, ohne daß der Verbrennungsmotorblock im Standheizbetrieb mit erwärmt wird. In einer weiteren nicht dargestellten Ausführungsform zweigen von der Leitung 12 zwei parallel geschaltete Leitungen mit jeweiligem Gehäuse 18 ab, die nachfolgend wieder in die Leitung 15 münden. Auf diese Weise ist es möglich den Fahrgastinnenraum partiell, beispielsweise Fahrer- und/oder Beifahrerseite, zu erwärmen. Es sollte deutlich sein, daß die Leitungen 12, 15 auf besonders einfache Weise als Doppelschlauch ausgeführt sein können.

## Patentansprüche

1. Kühlsystem für ein Kraftfahrzeug mit einem ersten Kühlmittelkreislauf, der Kühlkanäle eines Verbrennungsmotors einschließt und einem zweiten Kühlmittelkreislauf zur Fahrzeuginnenraumbeheizung, wobei jeder Kreislauf zumindest eine Leitung, zumindest eine Pumpe und zumindest einen Wärmetauscher aufweist und wobei der zweite Kühlmittelkreislauf über eine Zulaufstelle und eine Ablaufstelle mit dem ersten Kühlmittelkreislauf verbunden ist, wobei die Pumpe des zweiten Kühlkreislaufes steuerbar ist, **dadurch gekennzeichnet,** daß die Zulaufstelle (11) und die Ablaufstelle (16) des zweiten Kühlmittelkreislaufes (3) derart abflußseitig der Kühlkanäle des Verbrennungsmotors (7) mit einer Leitung des ersten Kühlmittelkreislaufes (2) verbunden sind, daß unabhängig vom Durchfluß im ersten Kühlmittelkreislauf (2) der Flüssigkeitsdruck der Zulaufstelle (11) gleich dem Flüssigkeitsdruck der Ablaufstelle (16) ist.

2. Kühlsystem nach Anspruch 1, **dadurch gekennzeichnet,** daß der zweite Kühlmittelkreislauf (3) über ein Kreuz-Kopplungsstück (17) mit der Leitung (8) des ersten Kühlmittelkreislaufes (2) verbunden ist.

3. Kühlsystem nach Anspruch 1 oder 2, **dadurch gekennzeichnet,** daß die Pumpe und der Wärmetauscher des zweiten Kühlmittelkreislaufes in einem separaten Gehäuse angeordnet sind.

4. Kühlsystem nach einem der vorhergehenden Ansprüche, **dadurch gekennzeichnet,** daß das Gehäuse (18) ein Gebläse (20) aufweist.

5. Kühlsystem nach einem der vorhergehenden Ansprüche, **dadurch gekennzeichnet,** daß der zweite Kühlmittelkreislauf (3) zweifach ausgeführt wird und jeweils eine Pumpe und einen Wärmetauscher aufweist.
